# EUROPEAN PATENT APPLICATION

(11) **EP 3 125 162 A1**
(43) Date of publication of application: **01.02.2017**
(21) Application number: 16176963.3
(22) Date of filing: 29.06.2016
(51) Int. Cl.: G06Q 10/00, G06Q 50/00

(54) **METHOD AND DEVICE FOR MARKING UNKNOWN NUMBER**

(30) Priority: 28.07.2015 CN 201510450915
(71) Applicant: Xiaomi Inc., Beijing 100085 (CN)
(72) Inventor: CHEN, Zhijun, Haidian District, Beijing 100085 (CN); LONG, Fei, Haidian District, Beijing 100085 (CN); ZHANG, Tao, Haidian District, Beijing 100085 (CN)
(74) Representative: Loustalan, Paul William

(57) **Abstract**

Described are a method and device for marking a strange number. The method includes: an information acquisition request including a first phone number which is sent from a terminal is received, wherein the information acquisition request is sent from the terminal when it is detected that the first phone number of a correspondent node communicating with the terminal is a strange number (201); according to a preset corresponding relationship between a phone number and a social account, a first social account corresponding to the first phone number is queried (202); it is detected whether the first social account is a friend account of a second social account, wherein the second social account is a social account corresponding to a second phone number of the terminal (203); when the first social account is the friend account, account information of the first social account is obtained and sent to the terminal (204).

## Description

### TECHNICAL FIELD

Embodiments of the present disclosure relates to the technical field of communications, and more particularly, to a method and device for marking an unknown number.

### BACKGROUND

A user may receive a call from an unknown number when using a terminal. So it is needed to prompt the user about related information of the unknown number, so as to prevent the user from missing a call from a friend since the user does not answer the call for avoiding receiving a fraud call, a sales call and the like

### SUMMARY

Accordingly, the present invention provides a method and device for marking an unknown number. As used herein, the term "unknown number" refers to a telephone number, or the like, that the terminal does not have in a contact list, or the like. As such, the "unknown number" is a strange number to the terminal; the term "unknown number" and "strange number" are herein used interchangeably.

According to a first aspect, the invention relates to a method for marking an unknown number, which includes:
receiving an information acquisition request including a first phone number which is sent from a terminal, wherein the information acquisition request is sent from the terminal when it is detected that the first phone number of a correspondent node communicating with the terminal is an unknown number;
according to a preset corresponding relationship between a phone number and a social account, querying a first social account corresponding to the first phone number;
detecting whether the first social account is a friend account of a second social account, wherein the second social account is a social account corresponding to a second phone number of the terminal; and
when the first social account is the friend account of the second social account, obtaining account information of the first social account, and sending the account information to the terminal, wherein the account information is used for marking the unknown number.

Optionally, the method queries first social accounts from at least two social application systems; the step of detecting whether the first social account is the friend account of the second social account comprises:
for each first social account, selecting the second social account which belongs to the same social application system as the first social account; and
detecting whether the first social account is the friend account of the second social account which is selected and obtained.

Optionally, upon there being at least two second social accounts which are selected and obtained, before detecting whether the first social account is the friend account of the second social account which is selected and obtained, the method further comprises:
selecting a social account which is used by the terminal most frequently from the second social accounts which are selected and obtained; or,
selecting a social account which logged-in on the terminal most recently from the second social accounts which are selected and obtained; or,
selecting a social account under a default social application system from the second social accounts which are selected and obtained.

Optionally, the step of obtaining the account information of the first social account comprises:
obtaining note information corresponding to the first social account from related information corresponding to the second social account; and/or,
obtaining at least one of an account name, a nickname and an icon of the first social account.

Optionally, the method further comprises:
receiving a sharing instruction of sharing the account information of the first social account which is sent from the correspondent node; and
setting an attribute of the account information of the first social account as allowing for sharing, wherein the account information of the first social account whose attribute is set as allowing for sharing is allowed to be shared to the terminal on which the friend account of the first social account logs-in.

According to a second aspect, the invention relates to a device for marking an unknown number, which includes:
a request receiving module, which is configured to receive an information acquisition request including a first phone number which is sent from a terminal, wherein the information acquisition request is sent from the terminal when it is detected that the first phone number of a correspondent node communicating with the terminal is an unknown number;
a querying module, which is configured to query the first social account corresponding to the first phone number according to the preset corresponding relationship between the phone number and the social account;
a detecting module, which is configured to detect whether the first social account which is queried by the querying module is the friend account of the second social account, wherein the second social account is the social account corresponding to the second phone number of the terminal;
an obtaining module, which is configured, when the detection result of the detecting module is that the first social account is the friend account of the second social account, to obtain the account information of the first social account; and
a sending module, which is configured to send the account information which is obtained by the obtaining module to the terminal, wherein the account information is used for marking the unknown number.

Optionally, the detecting module includes:
a first selecting submodule, which is configured, when the querying module queries first social accounts from at least two social application systems, for each first social account, to select the second social account which belongs to the same social application system as the first social account; and
a detecting submodule, which is configured to detect whether the first social account is the friend account of the second social account which is obtained by the first selecting submodule.

Optionally, the detecting module further includes a second selecting submodule;
the second selecting submodule is configured, upon there being at least two second social accounts which are obtained by the first selecting submodule, and before the detecting submodule detects whether the first social account is the friend account of the second social account which is selected and obtained:
to select a social account which is used by the terminal most frequently from the second social accounts which are selected and obtained,
or to select a social account which logged-in on the terminal most recently from the second social accounts which are selected and obtained,
or to select a social account under a default social application system from the second social accounts which are selected and obtained.

Optionally, the obtaining module is further configured:
to obtain note information corresponding to the first social account from related information corresponding to the second social account; and/or,
to obtain at least one of an account name, a nickname and an icon of the first social account.

Optionally, the device further includes:
an instruction receiving module, which is configured to receive a sharing instruction of sharing the account information of the first social account which is sent from the correspondent node; and
a setting module, which is configured to set an attribute of the account information of the first social account as allowing for sharing, wherein the account information of the first social account whose attribute is set as allowing for sharing is allowed to be shared to the terminal on which the friend account of the first social account logs-in.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

According to a third aspect, the invention relates to a device for marking an unknown number, which includes:
a processor;
a memory, which is configured to store a processor executable instruction;
wherein, the processor is configured:
to receive an information acquisition request including a first phone number which is sent from a terminal, wherein the information acquisition request is sent from the terminal when it is detected that the first phone number of a correspondent node communicating with the terminal is an unknown number;
to query the first social account corresponding to the first phone number according to the preset corresponding relationship between the phone number and the social account;
to detect whether the first social account is the friend account of the second social account, wherein the second social account is the social account corresponding to the second phone number of the terminal; and
when the first social account is the friend account of the second social account, to obtain the account information of the first social account, and to send the account information to the terminal, wherein the account information is used for marking the unknown number.

The processor may be further configured to carry out the method of marking an unknown number as described herein.

According to a fourth aspect, the invention relates to a computer program including instructions for executing the steps of the method for marking n unknown number mentioned above when said program is executed by a computer.

According to a fifth aspect, the invention relates to a recording medium readable by a computer and having recorded thereon a computer program including instructions for executing the steps of a method for marking an unknown number mentioned above.

The technical solutions according to embodiments of the present disclosure may include the following beneficial effects:
when the terminal communicates with the correspondent node whose phone number is the unknown number, the first social account corresponding to the first phone number of the correspondent node is queried, and when the first social account is the friend account of the second social account corresponding to the second phone number of the terminal, the account information of the first social account is fed back to the terminal, then the terminal uses the account information to mark the unknown number, so that the user can determine which friend's number the unknown number is, and the effect that the user can determine the friend through the account information of the first social account corresponding to the unknown number is achieved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating an implementation environment related to a method for marking a strange number, according to a part of exemplary embodiments.
Fig. 2 is a flow chart showing a method for marking a strange number, according to an exemplary embodiment.
Fig. 3A is a flow chart showing a method for marking a strange number, according to another exemplary embodiment.
Fig. 3B is a schematic diagram illustrating that a terminal marks a first phone number through account information, according to another exemplary embodiment.
Fig. 3C is a flow chart showing another method for marking a strange number, according to another exemplary embodiment.
Fig. 4 is a block diagram of a device for marking a strange number, according to an exemplary embodiment.
Fig. 5 is a block diagram of a device for marking a strange number, according to another exemplary embodiment.
Fig. 6 is a block diagram of a device for marking a strange number, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

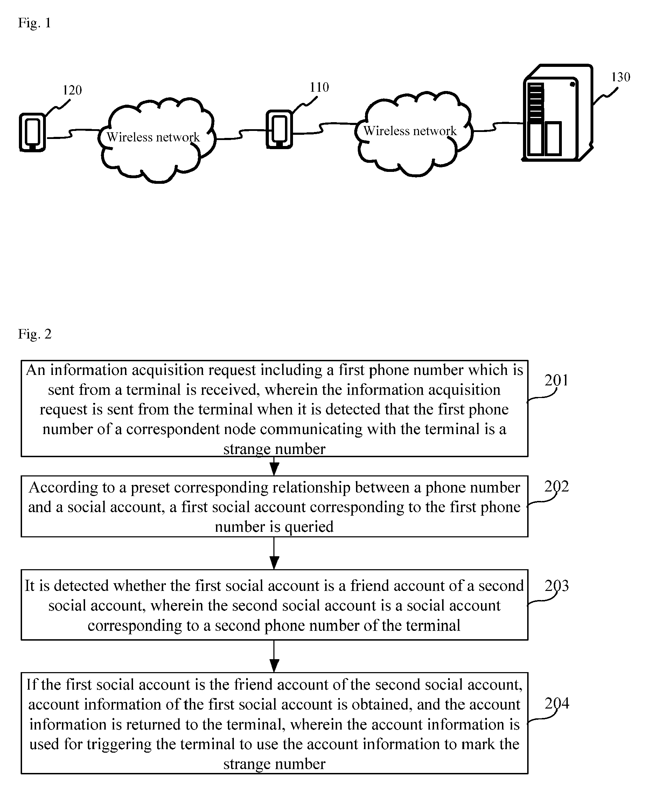

Fig. 1 is a schematic diagram illustrating an implementation environment related to a method for marking a strange number, according to a part of exemplary embodiments. As shown in Fig. 1, the implementation environment may include a terminal 110, a correspondent node 120 and a server 130.

The terminal 110 and the correspondent node 120 are two terminals communicating with each other. For example, the terminal 110 and the correspondent node 120 may be a mobile phone. Besides, the terminal 110 can connect with the server 130 through a wireless network.

The server 130 may be one or more than one server, or a cloud computing centre. In other words, the server 130 may be realized by one server or a combination of more than one server; or, the server 130 may be a virtual computing platform formed by an entire cluster of services.

Fig. 2 is a flow chart showing a method for marking a strange number, according to an exemplary embodiment; the present embodiment is illustrated by taking that the method for marking a strange number is applied to the server 130 in the implementation environment shown in Fig. 1 for example. As shown in Fig. 2, the method for marking a strange number may include the following steps.

In step 201, an information acquisition request including a first phone number sent from a terminal is received, wherein the information acquisition request is sent from the terminal when it is detected that the first phone number of a correspondent node communicating with the terminal is a strange number.

In step 202, according to a preset corresponding relationship between a phone number and a social account, a first social account corresponding to the first phone number is queried.

In step 203, it is detected whether the first social account is a friend account of a second social account, wherein the second social account is a social account corresponding to a second phone number of the terminal.

In step 204, if the first social account is the friend account of the second social account, account information of the first social account is obtained and sent to the terminal, wherein account information is used for triggering the terminal to mark the strange number by using the account information.

To sum up, according to the method for marking a strange number according to the present disclosure, when the terminal communicates with the correspondent node whose phone number is a strange number, the first social account corresponding to the first phone number of the correspondent node is queried; when the first social account is the friend account of the second social account corresponding to the second phone number of the terminal, the account information of the first social account is fed back to the terminal, and then the terminal uses the account information to mark the strange number, thus the present disclosure solves the problem in the related art that when the terminal marks the strange number according to the category of the strange number, the user still cannot determine which friend's number the strange number is, and achieves the effect that the user can determine the friend through the account information of the first social account corresponding to the strange number.

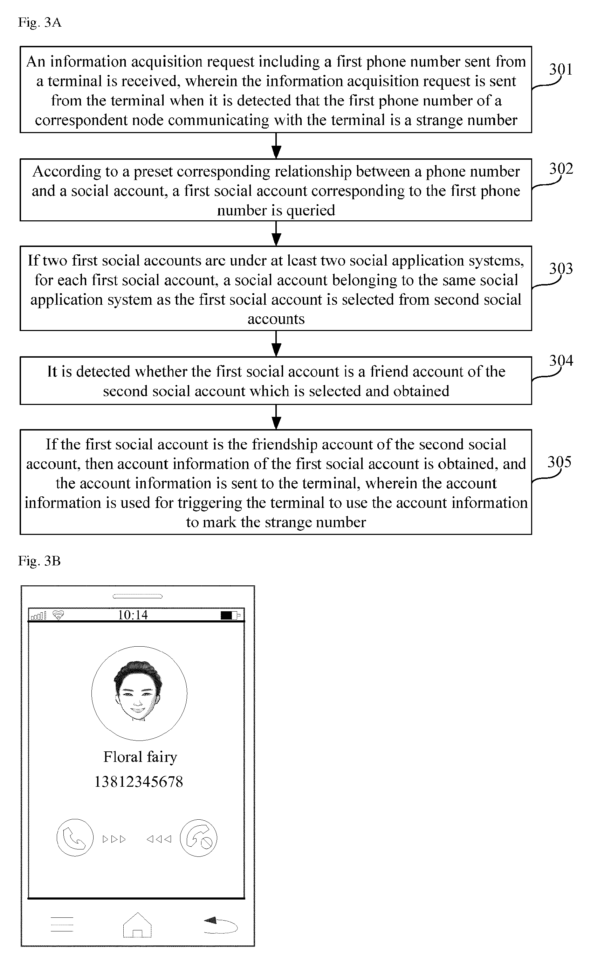

Fig. 3A is a flow chart showing a method for marking a strange number, according to another exemplary embodiment; the present embodiment is illustrated by taking that the method for marking a strange number is applied to a server 130 in the implementation environment shown in Fig. 1 for example. As shown in Fig. 3A, the method for marking a strange number may include the following steps.

In step 301, an information acquisition request including a first phone number sent from a terminal is received, wherein the information acquisition request is sent from the terminal when it is detected that the first phone number of a correspondent node communicating with the terminal is a strange number.

When the terminal communicates with the correspondent node, the terminal can detect whether the first phone number of the correspondent node is stored in an address book. Optionally, the terminal can detect whether the first phone number is stored in a local address book, or in a cloud address book, or in both the local address book and the cloud address book. In an embodiment, when the first phone number is not stored in the local address book or the cloud address book, the first phone number is the strange number. In another embodiment, when the first phone number is not stored in both the local address book and the cloud address book, the first phone number is the strange number.

When a detection result of the server is that the first phone number is not stored in the address book, namely the first phone number is the strange number, the terminal can send the information acquisition request including the first phone number to the server. Correspondingly, the server can receive the information acquisition request including the first phone number which is sent from the terminal.

When a detection result of the server is that the first phone number is stored in the address book, the terminal can mark the first phone number through contact information of the first phone number stored in the address book, and then the flow ends.

In the present embodiment, communication between the terminal and the correspondent node may include: communication with the correspondent node which is initiated by the terminal, or communication which is initiated by the correspondent node and responded by the terminal. The above communication may be a call or a short message.

In step 302, according to a preset corresponding relationship between a phone number and a social account, a first social account corresponding to the first phone number is queried.

After receiving the information acquisition request, the server can query the first social account corresponding to the first phone number included in the information acquisition request, according to the preset corresponding relationship between the stored phone number and the social account.

Optionally, there may be one or at least two first social accounts corresponding to the first phone number. When there are at least two first social accounts, they may be the accounts under a same social application system or the accounts under different social application systems. Wherein, social application clients corresponding to the social accounts under the same social application system share the same social application server. For example, MiTalk accounts corresponding to at least two MiTalk clients and sharing a MiTalk server are two accounts under the same social application system; since two different servers are used in MiTalk and MicroBlog respectively, MiTalk and MicroBlog are two accounts under different social application systems.

By taking that there are two first social accounts and the two first social accounts are under different social application systems for example, the first social accounts may be MicroBlog and MiTalk accounts.

Optionally, the way of obtaining the preset corresponding relationship between the phone number and the social account by the server may include the following two possible implementations.

The first implementation is that: the server receives the corresponding relationship between the phone number of the terminal and the social account which is sent from each terminal, and stores each received corresponding relationship as the preset corresponding relationship.

The user can bind her/his phone number with the social account in social application, and actively store this binding relationship in the server. Correspondingly, the server can store the corresponding relationship between the phone number and the social account which is sent from the terminal of each user.

The second implementation is that: the server accesses a social server of social application, obtains the corresponding relationship between the phone number and the social account from the social server, and stores the obtained corresponding relationship.

Optionally, when the server has an access permission to access the social server, the server can also obtain the corresponding relationship between the phone number and the social account from each social server, and store the obtained corresponding relationship.

It should be noted that, the server can also obtain the preset corresponding relationship in other ways, which are not limited by the present embodiment.

In step 303, if two first social accounts are under at least two social application systems, for each first social account, a social account belonging to the same social application system as the first social account is selected from second social accounts.

Wherein, the second social account is a social account corresponding to a second phone number of the terminal.

Similar to step 302, the server can query the second social account corresponding to the second phone number of the terminal according to the preset corresponding relationship between the phone number and the social account. Besides, when there are at least two first social accounts which are queried by the server, for each first social account, the server can select the social account belonging to the same social application system as the first social account from the second social accounts.

By taking that the first social account is a MicroBlog account for example, the server can select a MicroBlog account from the second social accounts.

It should be noted that, this step is an optional step; if there is one first social account queried in step 302, then the server can directly perform step 304, namely detecting whether the first social account is a friend account of the second social account.

In step 304, it is detected whether the first social account is a friend account of the second social account which is selected and obtained.

For each selected second social account, the server can obtain a friendship chain corresponding to the second social account, and detect whether the corresponding first social account is a friend account in the obtained friendship chain.

Optionally, the server can query the friendship chain of the second social account from the social application server corresponding to the first social account. Certainly, the server can also obtain the friendship chain of the second social account from the terminal, which is not limited by the present embodiment. Besides, as an example, the terminal and the server may be disconnected when the terminal communicates with the correspondent node, the server can query the friendship chain of the second social account from the social application server preferentially.

In step 305, if the first social account is the friendship account of the second social account, then account information of the first social account is obtained and sent to the terminal, wherein the account information is used for triggering the terminal to use the account information to mark the strange number.

If the detection result of the server is that the first social account is the friendship account of the second social account, then the server can obtain the account information of the first social account, and return the obtained account information to the terminal. Correspondingly, the terminal can receive the account information returned from the server, and mark the strange number through the received account information. As an example, the account information is used for triggering the terminal to use the account information to mark a strange number.

Conversely, if the detection result of the server is that the first social account is not a friendship account of the second social account, then the server ends this flow. Or, the server queries a category that the first phone number belongs to, and feeds back the queried category to the terminal; then the terminal marks the first phone number through the received category.

Optionally, the step that the server obtains the account information of the first social account may include at least one of the following two possible implementations.

The first implementation is that: note information corresponding to the first social account is obtained from related information corresponding to the second social account.

Optionally, the server can access the social application server to obtain the related information corresponding to the second social account from the social application server, and then obtains the note information corresponding to the first social account from the related information. Wherein, the related information corresponding to the second social account at least includes the note information. Optionally, the server can send a query quest to the social application server, wherein the query request is used for querying the note information corresponding to the first social account in the second social account. After receiving the query request, the application server queries from stored information the note information corresponding to the first social account in the second social account, and returns the queried note information to the server. Correspondingly, the server receives the note information corresponding to the first social account returned from the social application server. Optionally, the query request can also request for querying the note information of each friend account of the second social account; then, after receiving the note information of each friend account returned from the social application server, the server selects the note information corresponding to the first social account from the note information of each friend account.

Optionally, the server can also send a query request to the terminal, wherein the query request is used for querying the note information corresponding to the first social account in the second social account. After receiving the query request, the terminal obtains the note information of the first social account from a social application client corresponding to the second social account which is installed on the terminal.

The above is illustrated by taking that the note information corresponding to the first social account in the second social account is obtained through the above two implementations for example. Optionally, the server can also obtain the note information through other implementations, which is not limited by the present embodiment.

The second implementation is that: at least one of an account name, a nickname and an icon of the first social account is obtained.

By taking that account information of the first social account is the note information corresponding to the first social account in the second social account and the icon of the first social account for example, Referring to Fig. 3B, after receiving the note information returned from the server, the terminal can use the received icon as an incoming call icon, and use the received note information to mark the first phone number.

To sum up, according to the method for marking a strange number according to the present disclosure, when the terminal communicates with the correspondent node whose phone number is a strange number, the first social account corresponding to the first phone number of the correspondent node is queried; when the first social account is the friend account of the second social account corresponding to the second phone number of the terminal, the account information of the first social account is fed back to the terminal, and then the terminal uses the account information to mark the strange number, thus the present disclosure solves the problem in the related art that when the terminal marks the strange number according to a category of the strange number, the user still cannot determine which friend's number the strange number is, and achieves the effect that the user can determine the friend through the account information of the first social account corresponding to the strange number.

It should be noted that, in step 303, if there are at least two second social accounts selected and obtained by the server, before performing step 304, the server can also perform the following steps.
(1) A social account which is used by the terminal most frequently is selected from the second social accounts which are selected and obtained.
   The more frequently the terminal uses the social account, the more familiar the user is with the account information of each friend account in the social accounts, so the server can select the social account which is used by the terminal most frequently from the second social accounts for enabling the user to conveniently know, according to the account information, which friend the user is communicating with currently after the terminal uses the account information of the first social account to mark the first phone number, thereby improving the user experience.
(2) A social account which logins on the terminal most recently is selected from the second social accounts which are selected and obtained.
   Similarly, the server can also select the social account which logins on the terminal most recently from the second social accounts.
(3) A social account under a default social application system is selected from the second social accounts which are selected and obtained.

Certainly, the server can also select the social account under the default social application system. For example, the MiTalk account is selected by default.

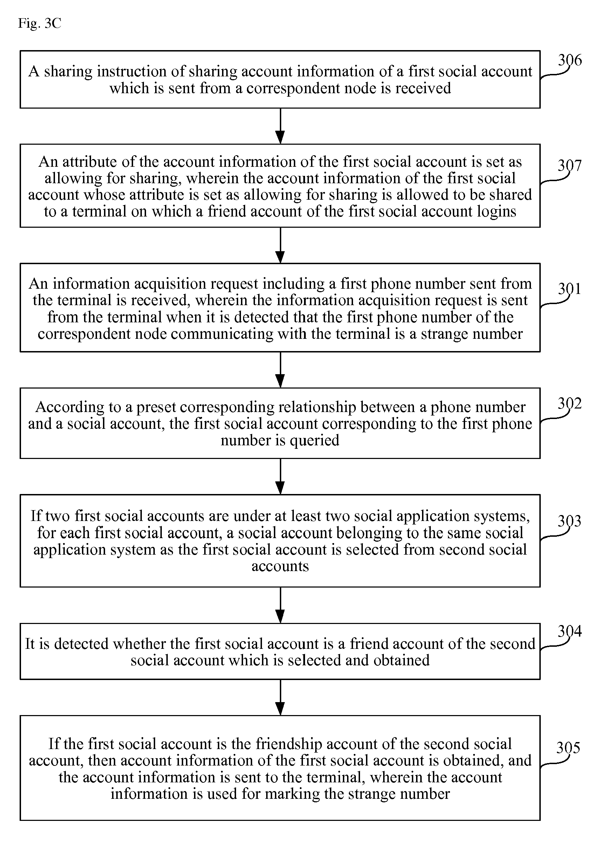

It should be noted that, Referring to Fig. 3C, the method for marking a strange number further includes the following steps.

In step 306, a sharing instruction of sharing the account information of the first social account which is sent from the correspondent node is received.

For ensuring the security of the account information of the first social account, the user of the correspondent node can set whether to share the account information of the first social account to the terminal on which the friend account logins.

Optionally, when the correspondent node sends the sharing instruction of sharing the account information of the first social account to the server, the server can receive the sharing instruction sent from the correspondent node.

In step 307, an attribute of the account information of the first social account is set as allowing for sharing, wherein the account information of the first social account whose attribute is set as allowing for sharing is allowed to be shared to the terminal on which the friend account of the first social account logins.

After receiving the sharing instruction, the server can set the attribute of the account information of the first social account as allowing for sharing. Wherein, the account information of the first social account whose attribute is set as allowing for sharing is allowed to be shared to the terminal on which the friend account of the first social account logins, and the account information of the first social account whose attribute is not set as allowing for sharing is not allowed to be shared to the terminal on which the friend account of the first social account logins.

Correspondingly, when obtaining the account information of the first social account, the server can also first detect whether the attribute of the account information has been set as allowing for sharing; if so, then the server obtains the account information; or else, the server cannot obtain the account information. Certainly, when the attribute of the account information is not set as allowing for sharing, the server can also obtain the account information, but just refuses to feed back the account information to the terminal, which is not limited by the present embodiment.

The account information of the first social account is set as allowing for sharing after receiving the sharing instruction, that is, the account information is allowed to be shared to the terminal on which the fiend account of the first social account logins, and the account information which is not set as allowing for sharing is not fed back to the corresponding terminal, thus the security of the account information of the first social account is ensured, the privacy of the user is ensured, and the user experience is improved.

The following is a device embodiment according to the present disclosure, which can be used for performing the method embodiment according to the present disclosure. The details which are not disclosed in the device embodiment according to the present disclosure refer to the method embodiment according to the present disclosure.

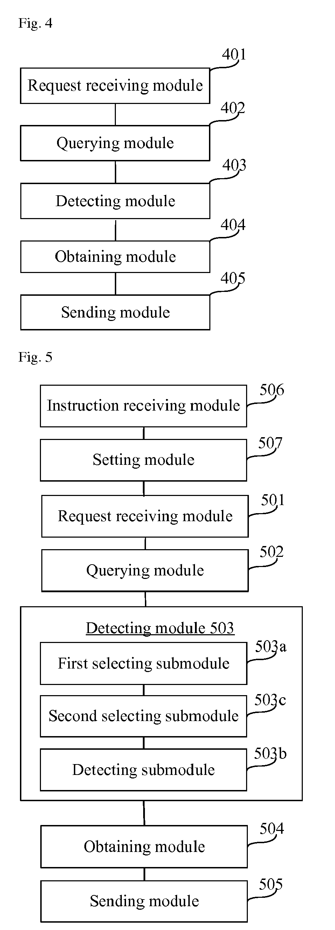

Fig. 4 is a block diagram of a device for marking a strange number, according to an exemplary embodiment. The present embodiment is illustrated by taking that an information verification device is applied to the server 130 in the implementation environment shown in Fig. 1. As shown in Fig. 4, the device for marking a strange number can include, but is not limited to, a request receiving module 401, a querying module 402, a detecting module 403, an obtaining module 404 and a sending module 405.

The request receiving module 401 is configured to receive an information acquisition request including a first phone number which is sent from a terminal, wherein the information acquisition request is sent from the terminal when it is detected that the first phone number of a correspondent node communicating with the terminal is a strange number;
the querying module 402 is configured to query a first social account corresponding to the first phone number according to a preset corresponding relationship between a phone number and a social account;
the detecting module 403 is configured to detect whether the first social account which is queried by the querying module 402 is a friend account of a second social account, wherein the second social account is a social account corresponding to a second phone number of the terminal;
the obtaining module 404 is configured, when a detection result of the detecting module 403 is that the first social account is the friend account of the second social account, to obtain account information of the first social account; and
the sending module 405 is configured to send the account information which is obtained by the obtaining module 404 to the terminal, wherein the account information is used for marking the strange number.

To sum up, according to the device for marking a strange number according to the present disclosure, when the terminal communicates with the correspondent node whose phone number is a strange number, the first social account corresponding to the first phone number of the correspondent node is queried; when the first social account is the friend account of the second social account corresponding to the second phone number of the terminal, the account information of the first social account is fed back to the terminal, and then the terminal uses the account information to mark the strange number, thus the present disclosure solves the problem in the related art that when the terminal marks the strange number according to a category of the strange number, the user still cannot determine which friend's number the strange number is, and achieves the effect that the user can determine the friend through the account information of the first social account corresponding to the strange number.

Fig. 5 is a block diagram of a device for marking a strange number, according to another exemplary embodiment. The present embodiment is illustrated by taking that an information verification device is applied to the server 130 in the implementation environment shown in Fig. 1. As shown in Fig. 5, the device for marking a strange number can include, but is not limited to, a request receiving module 501, a querying module 502, a detecting module 503, an obtaining module 504 and a sending module 505.

The request receiving module 501 is configured to receive an information acquisition request including a first phone number which is sent from a terminal, wherein the information acquisition request is sent from the terminal when it is detected that the first phone number of a correspondent node communicating with the terminal is a strange number;
the querying module 502 is configured to query a first social account corresponding to the first phone number according to a preset corresponding relationship between a phone number and a social account;
the detecting module 503 is configured to detect whether the first social account which is queried by the querying module 502 is a friend account of a second social account, wherein the second social account is a social account corresponding to a second phone number of the terminal;
the obtaining module 504 is configured, when a detection result of the detecting module 503 is that the first social account is the friend account of the second social account, to obtain account information of the first social account; and
the sending module 505 is configured to send the account information which is obtained by the obtaining module 504 to the terminal, wherein the account information is used for triggering the terminal to use the account information to mark the strange number.

Optionally, the detecting module 503 includes:
a first selecting submodule 503a, which is configured, when the first social accounts include accounts under at least two social application systems, for each first social account, to select a social account which belongs to a same social application system as the first social account from the second social accounts;
a detecting submodule 503b, which is configured to detect whether the first social account is the friend account of the second social account which is obtained by the first selecting submodule 503a.

Optionally, the detecting module 503 further includes a second selecting submodule 503c; the second selecting submodule 503c is configured, when there are at least two second social accounts which are obtained by the first selecting submodule 503a, and before the detecting submodule 503b detects whether the first social account is the friend account of the second social account which is selected and obtained, to select a social account which is used by the terminal most frequently from the second social accounts which are selected and obtained, or to select a social account which logins on the terminal most recently from the second social accounts which are selected and obtained, or to select a social account under a default social application system from the second social accounts which are selected and obtained.

Optionally, the obtaining module 504 is further configured:
to obtain note information corresponding to the first social account from related information corresponding to the second social account;
   and/or,
to obtain at least one of an account name, a nickname and an icon of the first social account.

Optionally, the device further includes:
an instruction receiving module 506, which is configured to receive a sharing instruction of sharing the account information of the first social account which is sent from the correspondent node; and
a setting module 507, which is configured to set an attribute of the account information of the first social account as allowing for sharing, wherein the account information of the first social account whose attribute is set as allowing for sharing is allowed to be shared to the terminal on which the friend account of the first social account logins.

To sum up, according to the device for marking a strange number according to the present disclosure, when the terminal communicates with the correspondent node whose phone number is the strange number, the first social account corresponding to the first phone number of the correspondent node is queried, and when the first social account is the friend account of the second social account corresponding to the second phone number of the terminal, the account information of the first social account is fed back to the terminal, and then the terminal uses the account information to mark the strange number, thus the present disclosure solves the problem in the related art that when the terminal marks the strange number according to a category of the strange number, the user still cannot determine which friend's number the strange number is, and achieves the effect that the user can determine the friend through the account information of the first social account corresponding to the strange number.

The account information of the first social account is set as allowing for sharing after receiving the sharing instruction, that is, the account information is allowed to be shared to the terminal on which the fiend account of the first social account logins, and the account information which is not set as allowing for sharing is not fed back to the corresponding terminal, thus the security of the account information of the first social account is ensured, the privacy of the user is ensured, and the user experience is improved.

With respect to the devices in the above embodiments, the specific manners for performing operations for individual modules therein have been described in detail in the embodiments regarding the methods, which will not be elaborated herein.

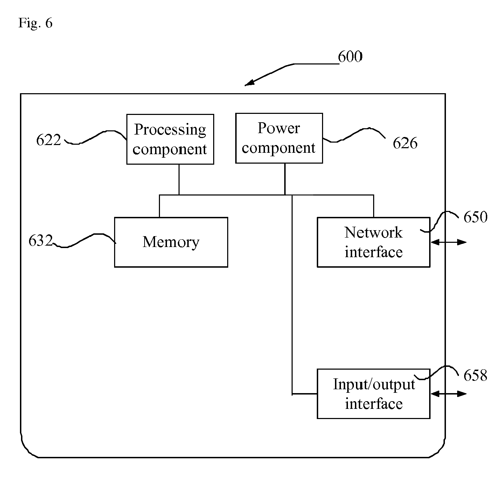

Fig. 6 is a block diagram of a device 600 for marking a strange number, according to an exemplary embodiment. For example, the device 600 may be provided as a server. Referring to Fig. 6, the device 600 includes a processing component 622 which further includes one or more processors, and a memory resource which is represented by a memory 632 and is configured to store instructions capable of being executed by the processing component 622, e.g., application programs. The application programs stored in the memory 632 may include one or more than one module corresponding to a set of instructions. In addition, the processing component 622 is configured to execute instructions to perform the method for marking a strange number.

The device 600 may also include a power component 626 which is configured to perform power management of the device 600, a wired or wireless network interface 650 which is configured to connect the device 600 to a network, and an Input/Output (I/O) interface 658. Operating systems which are stored in the memory 632, such as Windows ServerTM, Mac OS XTM, UnixTM, LinuxTM, and FreeBSDTM, can be run in the device 600.

It will be appreciated that the present invention is not limited to the exact construction that has been described above and illustrated in the accompanying drawings, and that various modifications and changes can be made.

### INDUSTRIAL APPLICABILITY

When a terminal communicates with a correspondent node whose phone number is a strange number, a first social account corresponding to a first phone number of the correspondent node is queried, and when the first social account is a friend account of a second social account corresponding to a second phone number of the terminal, account information of the first social account is fed back to the terminal, and then the terminal uses the account information to mark the strange number; so that a user can determine which friend's number the strange number is, and the effect that the user can determine the friend through the account information of the first social account corresponding to the strange number can be achieved.

## Claims

1. A method for marking an unknown number, **characterized in that** the method comprises:
receiving an information acquisition request including a first phone number which is sent from a terminal, wherein the information acquisition request is sent from the terminal when it is detected that the first phone number of a correspondent node communicating with the terminal is an unknown number (201);
according to a preset corresponding relationship between a phone number and a social account, querying a first social account corresponding to the first phone number (202);
detecting whether the first social account is a friend account of a second social account, wherein the second social account is a social account corresponding to a second phone number of the terminal (203); and
when the first social account is the friend account of the second social account, obtaining account information of the first social account, and sending the account information to the terminal, wherein the account information is used for marking the unknown number (204).

2. The method of claim 1, wherein the method queries first social accounts from at least two social application systems; the step of detecting whether the first social account is the friend account of the second social account comprises:
for each first social account, selecting the second social account which belongs to the same social application system as the first social account; and
detecting whether the first social account is the friend account of the second social account which is selected and obtained.

3. The method of claim 2, further comprising, upon there being at least two second social accounts which are selected and obtained, before detecting whether the first social account is the friend account of the second social account which is selected and obtained:
selecting a social account which is used by the terminal most frequently from the second social accounts which are selected and obtained; or,
selecting a social account which logged-in on the terminal most recently from the second social accounts which are selected and obtained; or,
selecting a social account under a default social application system from the second social accounts which are selected and obtained.

4. The method of any of claims 1, 2 or 3, wherein the step of obtaining the account information of the first social account comprises:
obtaining note information corresponding to the first social account from related information corresponding to the second social account; and/or,
obtaining at least one of an account name, a nickname, and an icon, of the first social account.

5. The method of any one of claims 1 to 4, further comprising:
receiving a sharing instruction of sharing the account information of the first social account which is sent from the correspondent node; and
setting an attribute of the account information of the first social account as allowing for sharing, wherein the account information of the first social account whose attribute is set as allowing for sharing is allowed to be shared to the terminal on which the friend account of the first social account logs-in.

6. A device for marking an unknown number, **characterized in that** the device comprises:
a request receiving module (401, 501), which is configured to receive an information acquisition request including a first phone number which is sent from a terminal, wherein the information acquisition request is sent from the terminal when it is detected that the first phone number of a correspondent node communicating with the terminal is an unknown number;
a querying module (402, 502), which is configured to query a first social account corresponding to the first phone number according to a preset corresponding relationship between a phone number and a social account;
a detecting module (403, 503), which is configured to detect whether the first social account which is queried by the querying module (402, 502) is a friend account of a second social account, wherein the second social account is a social account corresponding to a second phone number of the terminal;
an obtaining module (404, 504), which is configured, when a detection result of the detecting module (403, 503) is that the first social account is the friend account of the second social account, to obtain account information of the first social account; and
a sending module (405, 505), which is configured to send the account information which is obtained by the obtaining module (404, 504) to the terminal, wherein the account information is used for marking the unknown number.

7. The device of claim 6, wherein the detecting module (503) comprises:
a first selecting submodule (503a), which is configured, when the querying module queries first social accounts from at least two social application systems, for each first social account, to select the second social account which belongs to the same social application system as the first social account; and
a detecting submodule (503b), which is configured to detect whether the first social account is the friend account of the second social account which is obtained by the first selecting submodule (503a).

8. The device of claim 7, wherein the detecting module (503) further comprises a second selecting submodule (503c);
the second selecting submodule (503c) is configured, upon there being at least two second social accounts which are obtained by the first selecting submodule (503a), and before the detecting submodule (503b) detects whether the first social account is the friend account of the second social account which is selected and obtained:
to select a social account which is used by the terminal most frequently from the second social accounts which are selected and obtained, or
to select a social account which logged-in on the terminal most recently from the second social accounts which are selected and obtained, or
to select a social account under a default social application system from the second social accounts which are selected and obtained.

9. The device of claim 6, 7 or 8, wherein the obtaining module (504) is further configured:
to obtain note information corresponding to the first social account from related information corresponding to the second social account; and/or,
to obtain at least one of an account name, a nickname and an icon of the first social account.

10. The device of any of claims 6 to 9, further comprising:
an instruction receiving module (506), which is configured to receive a sharing instruction of sharing the account information of the first social account which is sent from the correspondent node; and
a setting module (507), which is configured to set an attribute of the account information of the first social account as allowing for sharing, wherein the account information of the first social account whose attribute is set as allowing for sharing is allowed to be shared to the terminal on which the friend account of the first social account logs-in.

11. A device for marking an unknown number, **characterized in that** the device comprises:
a processor (622); and
a memory (632), which is configured to store a processor executable instruction;
wherein, the processor is configured to carry out the method of any of claims 1 to 5.

12. A computer program including instructions for executing the steps of a method for marking an unknown number according to any one of claims 1 to 5 when said program is executed by a computer.

13. A recording medium readable by a computer and having recorded thereon a computer program including instructions for executing the steps of a method for marking an unknown number according to any one of claims 1 to 5.
